(19) Europäisches Patentamt
European Patent Office
Office européen des brevets

(11) **EP 2 871 830 A1**

(12) **EUROPEAN PATENT APPLICATION**

(43) Date of publication:
**13.05.2015  Bulletin 2015/20**

(51) Int Cl.:
***H04N 5/225*** (2006.01)          ***G02B 3/00*** (2006.01)

(21) Application number: **13290275.0**

(22) Date of filing: **08.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Drazic, Valter**
  **F-35576 Cesson Sevigne Cedex (FR)**
• **Sabater, Neus**
  **F-35576 Cesson Sevigne Cedex (FR)**

(74) Representative: **Rolland, Sophie**
**Technicolor**
**1, rue Jeanne d'Arc**
**92443 Issy-les-Moulineaux (FR)**

(54) **Optical assembly for plenoptic camera**

(57)    A plenoptic optical assembly (201) comprising a primary lens (20) and a lenslet array (21), the lenslet array comprising a plurality of microlenses (211, 212, 21 n), wherein a color filter array (22) is arranged on said lenslet array.

**Fig 2**

**Description**

**1. Domain of the invention.**

The invention relates to the domain of optical assembly for plenoptic camera.

**2. Prior art**

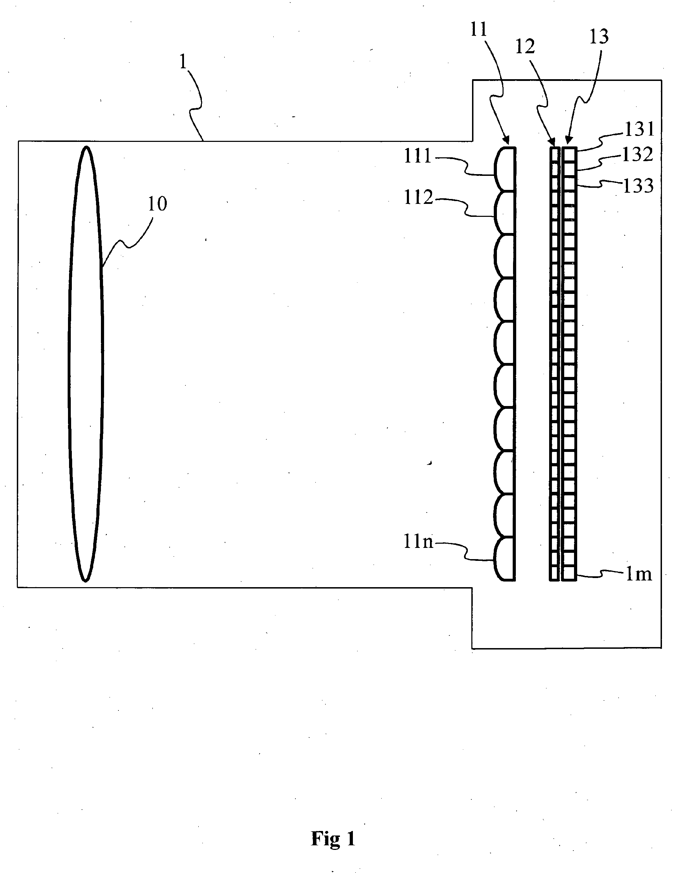

According to the prior art, it is known to acquire different views of a same scene with a plenoptic camera, also called light-field camera. **Figure 1** illustrates such a plenoptic camera 1 according to prior art. The plenoptic camera 1 is composed of a lens arrangement associated with a photosensor array 13, also called image sensor array 13. The photosensor array 13 comprises a large number m of photosensors 131, 132, 133 to 1m arranged in the form of a grid of X columns and Y lines, m corresponding to X time Y. A color filter array (CFA) 12 is arranged on the photosensor array 13. The CFA 12 typically arranges RGB (Red, Green and Blue) color filters on the photosensor array, the RGB arrangement taking for the example the form of a Bayer filter mosaic. Typically, one color filter (red, green or blue filter) is associated with one photosensor according to a predetermined pattern, which comprises 50 % green, 25 % red and 25 % blue in the example of a Bayer filter, such a pattern being also called RGBG, GRGB or RGGB pattern. The lens arrangement comprises a primary lens 10, also called main lens, and a lenslet array 11, which comprises a plurality of n microlenses 111, 112, 1n, n being a positive integer greater than or equal to 2. The microlenses 111, 112, 1n are arranged in such a way as to be optically each associated with a plurality of photosensors. The number of photosensors optically associated with one microlens corresponds to the number of views of the scene acquired with the plenoptic camera 1. To obtain the different views, the raw image (i.e. the color sensor data acquired with the photosensor array 13) is demosaiced then de-multiplexed. After the demosaicing step, RGB image data values are obtained at each pixel location for each view.

The demosaicing and de-multiplexing steps may lead to view-crosstalk artifacts and to missing color information artifacts (especially when the number of pixels optically associated with a microlens is an even number). Missing color information in a view means that at least one of the color component RGB (i.e. Red, Green or Blue) is missing in a view. Hence, whatever the number of pixel associated with a microlens is, even or odd, the views suffer from cross-talk and/or from missing color information.

**3. Summary of the invention**

The purpose of the invention is to overcome at least one of these disadvantages of the prior art.

More specifically, the purpose of the invention is to enhance the quality of images of a scene acquired when using a plenoptic optical assembly.

The invention relates to a plenoptic optical assembly comprising a primary lens and a lenslet array, the lenslet array comprising a plurality of microlenses, a color filter array being arranged on the lenslet array.

According to a particular characteristic, the color filter array comprises a plurality of color filters, the plurality of color filters being optically associated with the plurality of microlenses according to a predetermined pattern in such a way that each single color filter is optically associated with a different microlens.

Advantageously, the predetermined pattern associates two green color filters, one blue color filter and one red color filter with respectively each microlens of a set of four microlenses arranged in two lines and two columns.

According to a specific characteristic, the geometry of a microlens of the plurality of microlenses is adjusted according to the color filter optically associated with the microlens.

Advantageously, each microlens of the plurality of microlenses has a plane side and a convex side, the lenslet array having a first side, called plane side, formed with the plane sides of the plurality of microlenses and a second side, called convex side, formed with the convex sides of the plurality of microlenses, the color filter array being arranged on the first side.

According to another characteristic, the second side of the lenslet array faces the primary lens.

Advantageously, both first and second sides of each microlens of the plurality of microlenses are convex, the lenslet array having a first side formed with the first convex sides of the plurality of microlenses and a second side formed with the second convex sides of the plurality of microlenses, the second side of the lenslet array facing the primary lens, the color filter array being arranged on the first side.

According to a particular characteristic, each microlens of the plurality of microlenses has a circular form.

According to another characteristic, each microlens of the plurality of microlenses has a rectangular form or a square form.

Advantageously, each microlens of the plurality of microlenses has an hexagonal form.

The invention also relates to a plenoptic camera comprising the plenoptic optical assembly.

Advantageously, the plenoptic camera comprises a photosensor array comprising a plurality of photosensors, at least two photosensors of the plurality of photosensors being optically associated with each microlens of the plurality of microlenses.

According to a specific characteristic, a gap is formed between the lenslet array and the photosensor array.

According to another characteristic, the color filter array faces the photosensor array.

The invention also relates to a telecommunication device comprising the plenoptic camera.

## 4. List of figures

The invention will be better understood, and other specific features and advantages will emerge upon reading the following description, the description making reference to the annexed drawings wherein:

- figure 1 shows a plenoptic camera, according to the prior art;
- figure 2 shows a plenoptic optical assembly, according to a particular embodiment of the invention;
- figure 3 shows light rays bundles passing through the plenoptic optical assembly of figure 2 and generating different views of a scene, according to a particular embodiment of the invention;
- figure 4 shows a color filter array associated with a lenslet array of the plenoptic optical assembly of figure 2, according to a particular embodiment of the invention;
- figures 5A and 5B show optical phase space representations of the association of points of a scene with microlens and color filter of the plenoptic optical assembly of figure 2, according to particular embodiments of the invention;
- figure 6 shows a representation of the different views of figure 3 once de-multiplexed, according to a particular embodiment of the invention;
- figures 7A and 7B show exemplar microlens arrangements for the plenoptic optical assembly of figure 2, according to two particular embodiments of the invention.

## 5. Detailed description of embodiments of the invention.

The invention will be described in reference to a particular embodiment of a plenoptic optical assembly comprising a primary lens (also called main lens) and a lenslet array. The main lens comprises one or several lenses and the lenslet array comprises a plurality of microlenses, i.e. at least two microlenses. According to this particular embodiment, a color filter array is arranged on the lenslet array.

It is understood by "a color filter array is arranged on the lenslet array" a juxtaposition of the color filter array and the lenslet array. The color filter array is either placed on the lenslet array in a way as to be in direct contact with a face of the lenslet array (i.e. there is a direct contact between the color filter array and the lenslet array without any additional layer between the color filter array and the lenslet array) or placed on the lenslet array in a way as to be without direct contact on a face of the lenslet array (i.e. there is no direct contact between the color filter array and the lenslet array, e.g. one or several transparent layers having a depth of one or several micrometers, associated with either the color filter array and/or the lenslet array, separating the color filter array from the lenslet array).

Arranging the color filter array on the lenslet array instead of on the photosensor array (as done in the prior art) enables to avoid any problem of inter-view crosstalk and/or of missing color information and enhances the quality of images resulting from the acquisition of a scene using the plenoptic optical assembly.

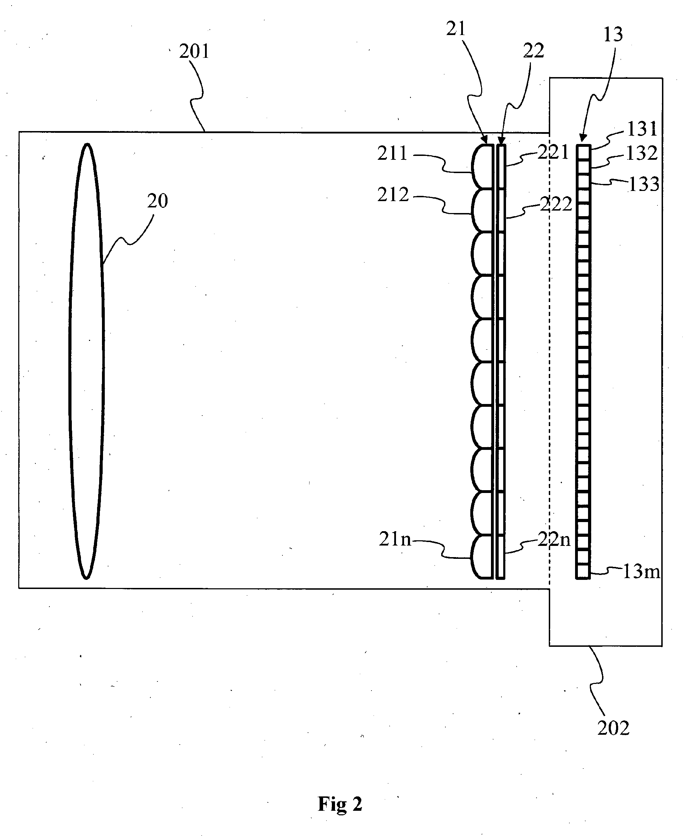

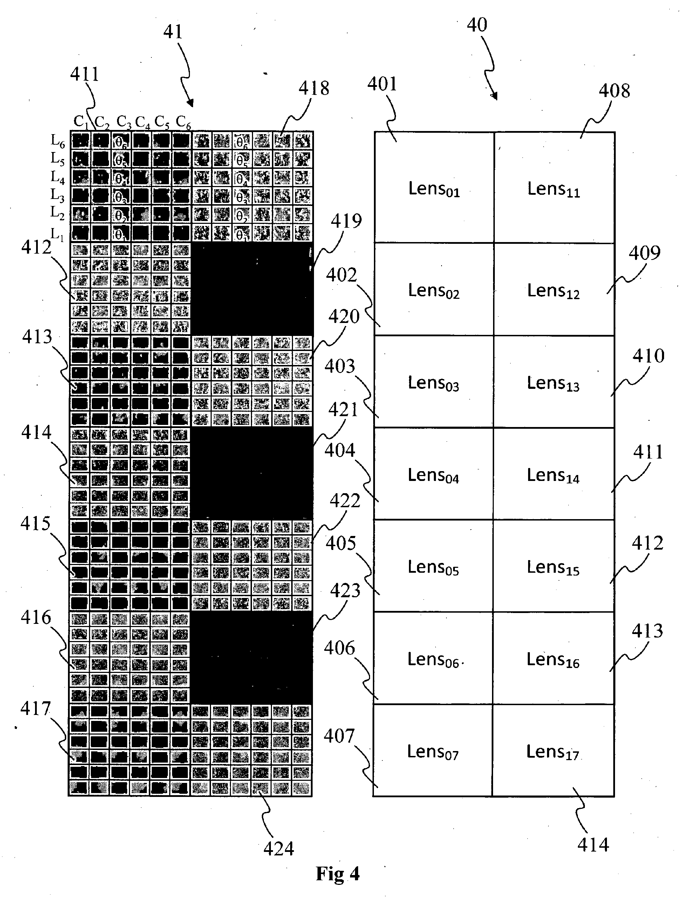

**Figure 2** shows a plenoptic optical assembly 201 (also called plenoptic lens unit), according to a particular and non-limitative embodiment of the invention. The plenoptic optical assembly 201 comprises a primary lens 20, similar to the primary lens 10 of figure 1. The primary lens 20 is advantageously formed of one or more lens elements. The plenoptic optical assembly 201 also comprises a lenslet array 21 comprising at least two microlenses 211, 212, 21n. For purposes of illustration, the lenslet array 21 is shown with a relative small number of microlenses, but the number of microlerises may extend up to several thousand or even one or several million of microlenses. A color filter array 22 is arranged on the lenslet array 21. The color filter array 22 advantageously comprises a plurality of color filters 221, 22, 22n, for example 3 color filters, i.e. for example one red filter, one green filter and one blue filter. The color filters are advantageously arranged according to a predetermined pattern in such a way that each single color filter (i.e. red, green and blue) is optically associated with a different microlens. For example, the color filter 221 (red, green or blue) is optically associated with the microlens 211, the color filter 222 (red, green or blue) is optically associated with the microlens 212 and the color filter 22n (red, green or blue) is optically associated with the microlens 21 n. An optical association of a microlens with a color filter means that all light rays passing through a given microlens also pass through the color filter optically associated with this given microlens. An example of an arrangement of the color filters with regard to the microlenses will be described hereinbelow with more details with regard to figure 4.

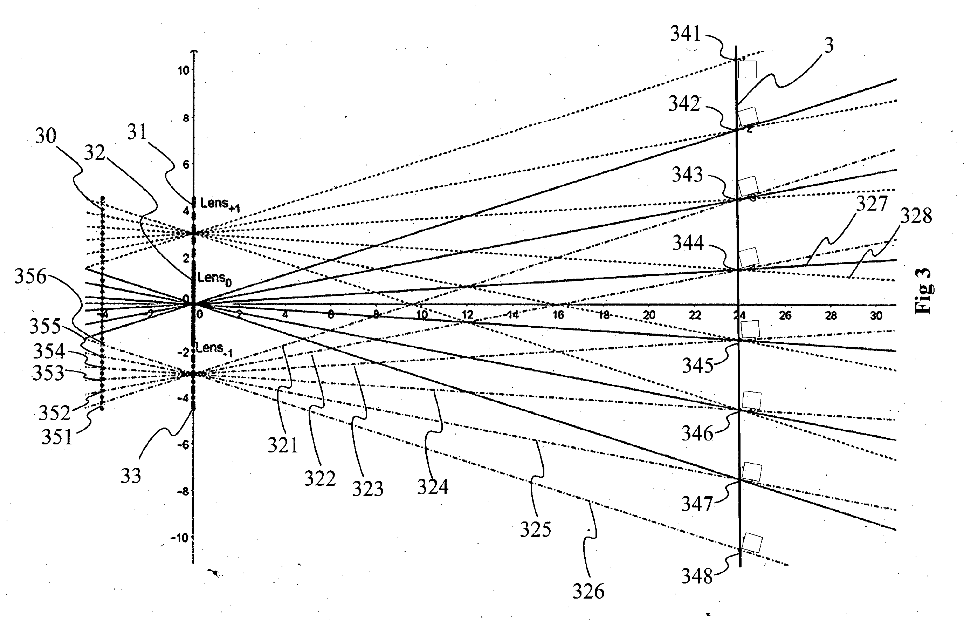

The plenoptic optical assembly 201 advantageously forms a lens unit adapted to be associated with a camera body 202. The camera body comprises a photosensor array 13, which comprises a plurality m of photosensors 131, 132, 133 to 13m. Each photosensor corresponds to a pixel of the raw image of the scene acquired with the photosensor array, each pixel covering a part (also called a point) of the scene. For purposes of illustration, the photosensor array 13 is shown with a relative small number of photosensors 131 to 13m. Naturally, the number of photosensors is not limited to the illustration of figure 2 but extends to any number of photosensors, for example several thousand or several millions of photosensors, for example 12.4 megapixels, a pixel corresponding to a photosensor (e.g., corresponding to an array of 4088x3040 pixels/photosensors). For associating the plenoptic optical assembly 201 with the camera body 202, the plenoptic optical assembly 201 comprises a first attaching part and the camera body comprises a second attaching part, the first and second attaching parts being compatible. Thanks to the first and second attaching parts, the plenoptic optical assembly 201 may be clipped into the camera body 202 or the plenoptic optical assembly 201 may be screwed with the camera body 202. An example of such first and second attaching parts of a lens unit configured to be associated with a camera body may be found in the Japanese patent application JP2013-105151A, which was published on May 30, 2013. The first and second attaching parts are configured in such a way that, once the plenoptic optical assembly 201 and the camera body 202 have been put together, the plenoptic optical assembly 201 and the camera body 202 form a plenoptic camera configured for acquiring multiple views of a scene at each acquisition of the scene. To that aim, a plurality of photosensors of the photosensor array 13 are optically associated with each microlens 221 to 22n of the lenslet array 22. For example, each microlens 221 to 22n of the lenslet array 22 is sized to correspond to an array of 2x1, 4x4 or 10x10 photosensors. Each photosensor of the plurality of photosensors optically associated with one single microlens enables to acquire raw data representative of a pixel of the scene according to one view angle, as it will be described with more details with regard to figures 3 and 4. According to a variant, the plenoptic optical assembly 201 and the camera body 202 form one single body and are assembled without being detachable.

In an advantageous way, each microlens of the lenslet array 21 has a plane side and a convex side. The convex side is advantageously oriented toward the primary lens while the opposite side, i.e. the plane side, is oriented toward the photosensors array 13. The first side of the lenslet array 21, called plane side, is formed with the plane sides of the microlenses 211 to 21 n. The second side of the lenslet array 21, called convex side, is formed with the convex sides of the microlenses 211 to 21 n. The color filter array 22 is advantageously arranged on the first side of the lenslet array 21, the first side of the lenslet array 21 being oriented toward (or facing) the photosensors array 13. According to a variant, the color filter array 22 is arranged on the second side, i.e. the convex side; of the lenslet array 21. According to this variant, the color filter array 22 is arranged on the side of the lenslet array 21 being oriented toward (or facing) the primary lens 20. According to another variant, each microlens of the lenslet array 21 is formed with two opposite convex sides. The lenslet array 21 then comprises two convex sides, the color filter array 22 being either arranged on the convex side being oriented toward (or facing) the primary lens 20 or on the convex side being oriented toward (or facing) the photosensors array 13.

Advantageously, the geometry of each microlens 211 to 21 n of the lenslet array 21 is adjusted according to the color filter that is optically associated with it. The geometry of a microlens comprises the radius of curvature of the convex side of the microlens. Then, the microlenses of the lenslet array 21 optically associated with a red filter all have a same first radius of curvature; the microlenses of the lenslet array 21 optically associated with a green filter all have a same second radius of curvature, which is different from the first radius of curvature; and the microlenses of the lenslet array 21 optically associated with a blue filter all have a same third radius of curvature, which is different from the first and second radius of curvature. Indeed, the focal length of a microlens depends from both the radius of curvature of the lens and the refractive index of the light, the refractive index being dependent from the wave length of the light, the wave lengths of each of the components of the light (for example red, green and blue components) being different from each other. As one microlens is optically associated with one specific color filter (for example either red, green or blue filter), a given microlens will let the wave lengths of the light components centered around the color of the color filter go through the given microlens (e.g. a microlens associated with a blue color filter will let the wave lengths centered around blue), and the radius curvature of the given microlens may be advantageously adapted to the color component of the color filter associated with it. The following equation may be used to optimize the radius of curvature of a microlens for each color component:

$$P = \frac{1}{f} = (n-1)\left[\frac{1}{R_1} - \frac{1}{R_2} + \frac{(n-1)t}{nR_1R_2}\right]$$

where

P is the power of the microlens,
f is the focal length of the microlens,
n is the refractive index of the lens material,

$R_1$ is the radius of curvature (with sign) of the lens surface closest to the light source, i.e. closest to the primary lens,
$R_2$ is the radius of curvature of the lens farthest from the light source, i.e. closest to the photosensor array,
t is the thickness of the microlens (corresponding to the distance along the microlens axis between the two surface vertices, i.e. corresponding

to the biggest thickness of the microlens along the microlens axis) According to a variant, the microlenses optically associated with two different color filters (for example the red and blue filters or the blue and green filters) have all the same radius of curvature while the microlenses optically associated with the other color filter (for example the green filter or the red filter respectively) have a radius of curvature different than the one used for the microlenses of the two different color filters. According to another variant, all the microlenses of the lenslet array 21 have the same geometry (i.e. the same radius of curvature), whatever the color filter with which they are optically associated. This variant has the advantage of easing the manufacturing process of the microlenses, the microlenses being all identical.

The lenslet array 21 is manufactured according to any method known by the skilled person in the art. The lenslet array 21 is for example manufactured using a polymer-on-glass approach, including a stamping or replication process wherein the lenslet array 21 is fabricated as a polymer attached to a transparent glass surface. The microlenses of the lenslet array are for example shaped by using photolithographic techniques as to give them the appropriate curvatures, especially for the convex side(s). One side of the lenslet array 21 is advantageously coated with the color filters according to a predetermined pattern, as explained with regard to figure 4. The color filter array is for exampled manufactured directly on the lenslet array, for example with gelatine dyeing, dyed polyimide, pigmented polyimide and pigmented acrylates, applied by photolithographic printing and electrodeposition or according to any method known by the skilled person in the art. According to a variant, a passivation layer is formed on the color filter array 22 to protect it. According to a variant, the color filter array is manufactured independently from the lenslet array. According to this variant, the color filter array 22 is assembled with the lenslet array 21, for example by bonding technique. The color filter array 22 may be placed directly on the lenslet array, i.e. with a direct contact between the color filter array 22 and the lenslet array may. According to another example, the color filter array is placed on the lenslet array without direct contact, i.e. for example with a transparent layer between the color filter array 22 and the lenslet array 21.

A gap is advantageously formed between the lenslet array 21 and the photosensor array 13. When the color filter array 22 is arranged on the side of the lenslet array 21 facing the photosensor array 13, it is understood that the gap formed between the lenslet array 21 and the photosensor array 13 is formed between the color filter array 22 and the photosensor array 13. The gap may be composed of air, of an optical material having an index n (for example a glass layer) or of multiple layers comprising at least one layer air layer and at least one optical material layer. Using a glass layer to form the gap has the advantages of keeping the lenslet array at a same distance from the photosensor array in each and every location and of reducing this distance when needed. If d is the distance between the output of the lenslet array and the photosensor array according to a longitudinal axis, having a layer composed of an optical material with an index n (n > 1, for example n = 1.5) between the lenslet array and the photosensor array enables to set the distance to d/n without modifying d. By adapting/modifying the index of the optical material of the layer forming the gap, it is possible to adapt/modify a parameter representative of the distance between the lenslet array and the photosensor array without modifying the distance d. According to an embodiment, the lenslet array 21 is placed and adjusted to be approximately at one focal length f (i.e. the focal $\pm$ 5 %) from the photosensor array 13, where f is the focal length of the microlenses. The lenslet array 21 is focused at the image plane of the primary lens 20 of the plenoptic optical assembly 201 and the microlenses of the lenslet array 21 are focused at infinity. According to another embodiment, in order to increase or maximize spatial resolution, i.e. to achieve sharper, higher spatial resolution of microlens images, the microlenses are focused on the image created by the primary lens inside the plenoptic optical assembly 201 and in front of the lenslet array 21 (i.e. between the lenslet array 21 and the primary lens 20), instead of being focused on the primary lens itself. According to this embodiment, the lenslet array 21 may be located at distances greater than f or less than f from the photosensor array 13. For example, the lenslet array 21 may be placed at distance 4/3 f from the photosensor array 13, or at other distances that are multiple of f, e.g. 0.5 f, 1.5 f or ¾ f.

**Figure 3** illustrates light rays bundles passing through the plenoptic optical assembly of figure 2, according to a particular and non-limitative embodiment of the invention. Figure 3 shows three light rays bundles passing through three microlenses 31, 32 and 33 respectively, the microlenses 31 to 33 belonging to the lenslet array 21. Before passing through the microlenses 30, 31 and 32, the light rays have passed through the primary lens 20. Points $P_1$ 341, $P_2$ 342, $P_3$ 343, $P_4$ 344, $P_5$ 345, $P_6$ 346, $P_7$ 347 and $P_8$ 348 correspond to the intersections between the light rays coming from the primary lens (not illustrated on figure 3) and the image plane 3. Light rays 321, 322, 323, 324, 325 and 326 pass through the microlens 33 and represents the light coming from the scene, images of which being acquired with the plenoptic camera comprising the plenoptic optical assembly 201, and passing through the primary lens 20 before passing through the microlens 33. The plane 30 represents the plane of the photosensor array 13 illustrated on figure 2. Pixels 351, 352, 353, 354, 355 and 356 (which each correspond to a photosensor of the photosensor array) correspond to the projection points of respectively the points $P_3$ 343, $P_4$ 344, $P_5$ 345, $P_6$ 346, $P_7$ 347 and $P_8$ 348 along respectively the light rays 321, 322, 323, 324, 325, 326 passing through the microlens 33. The light ray 321 forms an angle $\theta_1$ with an horizontal line passing through the centre of the microlens 33; the light ray 322 forms an angle $\theta_2$ with an horizontal line passing through the centre of the microlens 33; the light ray 323 forms an angle $\theta_3$ with an horizontal line passing through the centre of the microlens 33; the light ray 324 forms an angle $\theta_4$ with an horizontal line passing through the centre of the microlens 33; the light ray 325 forms an angle $\theta_5$ with an horizontal line passing through the centre of the microlens 33; and the light ray 326 forms an angle $\theta_6$ with an horizontal line passing through the centre of the microlens 33. Each photosensor 351 to 356 acquires image data of respectively the points 343 to 348 in association with location data of the points 343 to 348, the location data corresponding to the angle $\theta_1$ to $\theta_6$ associated with the light ray 321 to 326 hitting the photosensors 351 to 356. A same point of the image plane is viewed according to several angles via different microlenses, i.e. 6 angles $\theta_1$ to $\theta_6$ according to the non limitative embodiment of figure 3. The number of views of a same point of the image plane corresponds to the number of photosensors optically associated with a microlens. For example, the point $P_4$ 344 is viewed through the microlens 33 along the light ray 322 according to a viewing angle $\theta_2$, but also through the microlens 32 along the light ray 327 according to a viewing angle $\theta_3$, through the microlens 31 along the light ray 328 according to a viewing angle $\theta_4$, but also according to the viewing angles $\theta_1$, $\theta_5$ and $\theta_2$, even if not represented on figure 3.

Naturally, the number of photosensors optically associated with a microlens is not limited to six, figure 3 being an exemplar representation in 2D, i.e. a cross-section in the plane. The number of photosensors optically associated with a microlens may be comprised for example between 2 photosensors and up to several dozens or even one or several hundred of photosensors, several photosensors acquiring image data of points of the plane image 3 according to a same viewing angle, i.e. the photosensors belonging to a same line (respectively column according to the chosen convention for defining a viewing angle, i.e. with respect to horizontal or vertical plane respectively) of the array of photosensors optically associated with a same microlens acquire image data of several points according to a same viewing angle.

The number of photosensors optically associated with a microlens is not limited to an integer either but also extends to non integer numbers, for example $X + \frac{1}{2}$ or $X + 1/3$, where X is an integer number.

**Figure 4** illustrates a part 41 of a color filter array associated with a part 40 of the lenslet array 21 of the plenoptic optical assembly 201 of figure 2, according to a particular and non-limitative embodiment of the invention. The part 40 of the lenslet array comprises 14 microlenses 401 to 414 arranged according to two columns and seven lines. The part 41 of the color filter array (CFA) illustrated on figure 4 corresponds to the part 40 of the lenslet array. The CFA part 41 comprises 14 areas 411 to 424, each of the 14 areas 411 to 424 corresponding and being associated with one different microlens 401 to 414. According to the example of figure 4, each microlens 401 to 414 has a square form and each area 411 to 424 has the same square form, meaning that the surface of one area 411 to 424 is identical to the surface of one microlens 401 to 414. According to this example, the whole surface of a microlens is coated with a color filter. The CFA part of figure 4 comprises three different color filters, for example a red filter, a green filter and a blue filter arranged according to a predetermined pattern in such a way that each single color filter is optically associated with a different microlens. The optical association between a color filter and a microlens means that all light rays passing through a given microlens also pass through the color filter optically associated with the given microlens. The predetermined pattern illustrated on figure 4 is called RGGB pattern for 'Red', 'Green', 'Green', 'Blue' pattern. Indeed, for a block of four color filters (or in an equivalent way a block of four microlenses, according to two columns and two lines), for example the color filters 411, 418, 412 and 419, the upper left color filter 411 is 'Blue', the upper right color filter 418 is 'Green', the lower left color filter 412 is 'Green' and the lower right color filter 419 is 'Red'. In other words, the predetermined pattern associates two green color filters, one blue color filter and one red color filter with respectively each microlens of a set of four microlenses arranged in two lines and two columns. This predetermined pattern is then repeated for each block of four color filters (for example the block including the color filters 413, 420, 414 and 421; the block including the color filters 415, 422, 416 and 423) on the whole color filter array. If the number of microlenses of the lenslet array is a multiple of four, the surface covered by the 'Blue' color filter is 25 %, the surface covered by the 'Green' color filter is, 50 % and the surface covered by the 'Red' color filter is 25 %. On each color filter 411 to 424 is represented an array of pixels which correspond, for each color filter, to the projection of the photosensors optically associated with the color filter onto the color filter. Each array of pixels has advantageously a same number of pixels and comprises 6 lines $L_1$ to $L_6$ and 6 columns $C_1$ to $C_6$. Pixels of a same line are advantageously seen/acquired according to a same viewing angle, the pixels of the line $L_1$ being seen according to the viewing angle $\theta_1$ with respect to the horizontal plane (similarly $C_1$ with respect to the vertical plane), the pixels of the line $L_2$ being seen according to the viewing angle $\theta_2$ with respect to the horizontal plane (similarly $C_2$ with respect to the vertical plane), the pixels of the line $L_3$ being seen according to the viewing angle $\theta_3$ with respect to the horizontal plane'(similarly $C_3$ with respect to the vertical plane), the pixels of the line $L_4$ being seen according to the viewing angle $\theta_4$ with respect to the horizontal plane (similarly $C_4$ with respect to the vertical plane), the pixels of the line $L_5$ being seen according to the viewing angle $\theta_5$ with respect to the horizontal plane (similarly $C_5$ with respect to the vertical plane) and the pixels of the line $L_6$ being seen according to the viewing angle $\theta_6$ with respect to the horizontal plane (similarly $C_6$ with respect to the vertical plane).

Naturally, the number of columns and lines is not limited to six by may be comprised between two and for example 10, 20 or 50. The predetermined pattern is not limited to a RGGB pattern either. According to variants, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

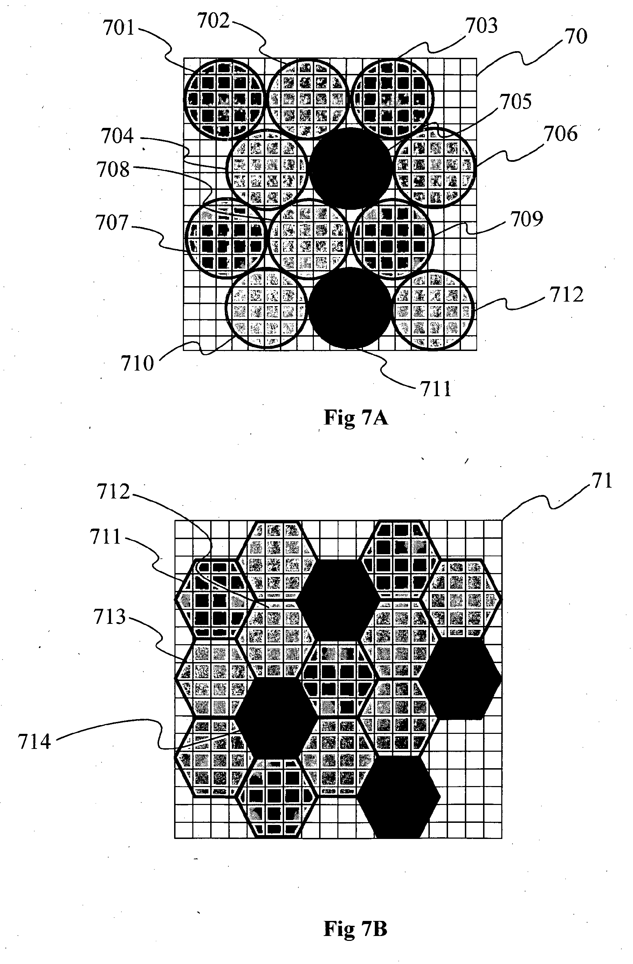

The form of the microlenses is not limited to a square either. Microlenses may also take the form of a rectangle or any other form. **Figures 7A and 7B** provides two different examples of the form that may be taken by the microlenses.

**Figure 7A** illustrates a first non-limitative exemplar microlenses arrangement with microlenses having a form different from a square, according to a particular embodiment. On figure 7A, each microlens 701 to 712 has a circular form, all microlenses 701 to 712 having the same radius. As to optimize the coverage of the photosensors array 70 by the lenslet array (a part of which being illustrated on figure 7B), the microlenses 701 to 712 are advantageously arranged in a quincunx arrangement, thus reducing the number of photosensors not optically associated with a microlens. As in the embodiment of figure 4, the microlenses 701 to 712 are coated with a color filter array according to a predetermined pattern. The pattern illustrated on figure 7A corresponds to a pattern of 2x2 microlenses corresponding to a RGGB pattern, i.e. for a block of four microlenses (or in other words for a block of four color filters) arranged with two lines and two columns, the upper left color filter associated with the upper left microlens 701 is 'Blue', the upper right color filter associated with the upper right microlens 702 is 'Green', the lower left color filter associated with the lower left microlens 704 is 'Green' and the lower right color filter associated with the lower right microlens 705 is 'Red'. This pattern is repeated for each and every block of four microlenses, for example for the block composed of the microlenses 707, 708, 710 and 711 in a way as to cover the whole lenslet array 21. Of course, the predetermined pattern may be any pattern different from the RGGB pattern, for example a RGBE pattern, a CYYM pattern, a CYGM pattern or a RGBW pattern in the form of a block of 2x2 microlenses or in the form of a block of 4x4 microlenses.

**Figure 7B** illustrates a second non-limitative exemplar microlenses arrangement with microlenses having a form different from a square, according to a particular embodiment. On figure 7B, each microlens 711 to 714 has an identical hexagonal form. As to optimize the coverage of the photosensors array 71 by the lenslet array (a part of which being illustrated on figure 7B), the microlenses 701 to 712 are advantageously arranged in a quincunx arrangement, thus reducing the number of photosensors not optically associated with a microlens. Compared to the arrangement of figure 7A, the arrangement of figure 7B has the advantage that there is no photosensor not covered by a microlens in the space located between several hexagonal microlenses. As in the embodiment of figure 4, the microlenses 711 to 714 are coated with a color filter array according to a predetermined pattern. The pattern illustrated on figure 7B corresponds to a pattern of 2x2 microlenses corresponding to a RGGB pattern, i.e. for a block of four microlenses (or in other words for a block of four color filters) arranged with two lines and two columns, the upper left color filter associated with the upper left microlens 711 is 'Blue', the upper right color filter associated with the upper right microlens 712 is 'Green', the lower left color filter associated with the lower left microlens 713 is 'Green' and the lower right color filter associated with the lower right microlens 714 is 'Red'. This pattern is repeated for each and every block of four microlenses of the lenslet array in a way as to cover the whole lenslet array 21. Of course, the predetermined pattern may be any pattern different from the RGGB pattern, for example a RGBE pattern, a CYYM pattern, a CYGM pattern or a RGBW pattern in the form of a block of 2x2 microlenses or in the form of a block of 4x4 microlenses.

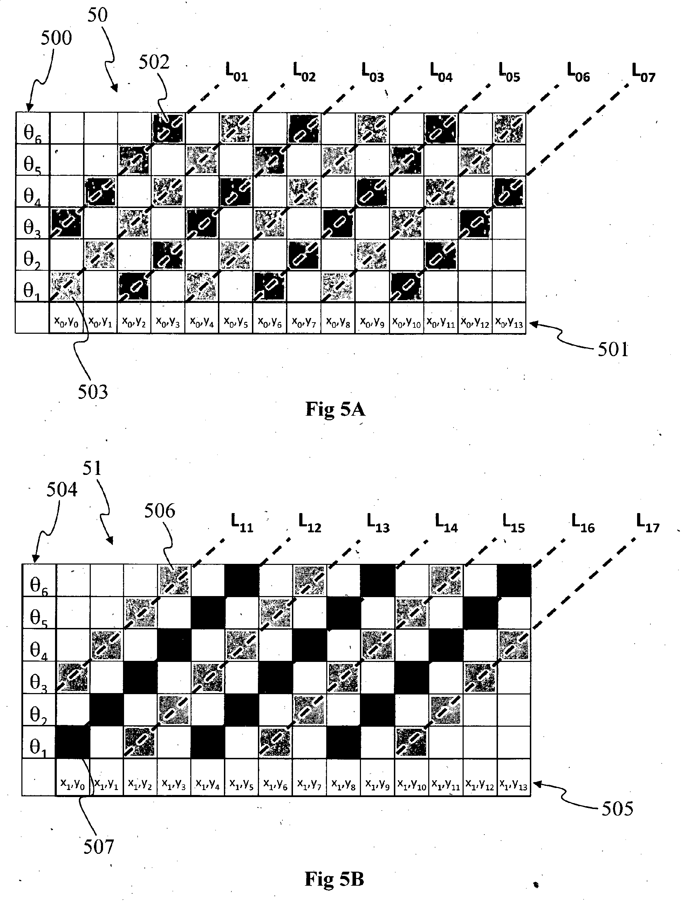

**Figures 5A and 5B** illustrate optical phase space representations of the association of points of a scene with microlens and color filter of the plenoptic optical assembly of figure 2, according to particular and non-limitative embodiments of the invention.

**Figure 5A** shows in an optical phase space 50 (position and angle) which points 501 $x_0,y_0$ through $x_0,y_{13}$ (the coordinates of which being expressed in the space of the photosensor array) are seen under which angle 500 and which color RGB (either Red, Green or Blue). Figure 5A illustrates the association between the points 501 of the scene with microlenses $L_{01}$ to $L_{07}$ (corresponding respectively to the microlenses $Lens_{01}$ 401 to $Lens_{07}$ 407 of figure 4) and the color filter 502 and 503. The color filter 502 is illustrated with average grey corresponding to the color filter 'Blue' associated with microlenses $L_{01}$, $L_{03}$, $L_{05}$ and $L_{07}$ (respectively referenced 401, 403, 405 and 407 and the color filter 'Blue' being referenced 411, 413, 415 and 417 on figure 4). The color filter 503 is illustrated with light grey corresponding to the color filter 'Green' associated with microlenses $L_{02}$, $L_{04}$ and $L_{06}$ (respectively referenced 402, 404 and 406 and the color filter 'Green' being referenced 412, 414 and 416 on figure 4). For instance, the point $x_0,y_0$ is seen by a green pixel under the angle $\theta_1$ through the lens $L_{02}$ and the same point $x_0,y_0$ is seen by a blue pixel under the angle $\theta_3$ through the lens $L_{01}$; the point $x_0,y_6$ is seen by a blue pixel under the angle $\theta_1$ through the lens $L_{05}$, by a green pixel under the angle $\theta_3$ through

the lens $L_{04}$ and by a blue pixel under the angle $\theta_5$ through the lens $L_{03}$.

**Figure 5B** shows in an optical phase space 51 (position and angle) which points 505 $x_1,y_0$ through $x_1,y_{13}$ (the coordinates of which being expressed in the space of the photosensor array) are seen under which angle 504 and which color RGB (either Red, Green or Blue). Figure 5B illustrates the association between the points 505 of the scene with microlenses $L_{11}$ to $L_{17}$ (corresponding respectively to the microlenses $Lens_{11}$ 408 to $Lens_{17}$ 414 of figure 4) and the color filter 506 and 507. The color filter 506 is illustrated with light grey corresponding to the color filter 'Green' associated with microlenses $L_{11}$, $L_{13}$, $L_{15}$ and $L_{17}$ (respectively referenced 408, 410, 412 and 414 and the color filter 'Green' being referenced 418, 420, 422 and 424 on figure 4). The color filter 507 is illustrated with dark grey corresponding to the color filter 'Red' associated with microlenses $L_{12}$, $L_{14}$ and $L_{16}$ (respectively referenced 409, 411 and 413 and the color filter 'Red' being referenced 419, 421 and 423 on figure 4). For instance, the point $x_1,y_0$ is seen by a red pixel under the angle $\theta_1$ through the lens $L_{12}$ and the same point $x_1,y_0$ is seen by a green pixel under the angle $\theta_3$ through the lens $L_{11}$; the point $x_1.y_6$ is seen by a green pixel under the angle $\theta_1$ through the lens $L_{15}$, by a red pixel under the angle $\theta_3$ through the lens $L_{14}$ and by a green pixel under the angle $\theta_5$ through the lens $L_{13}$.

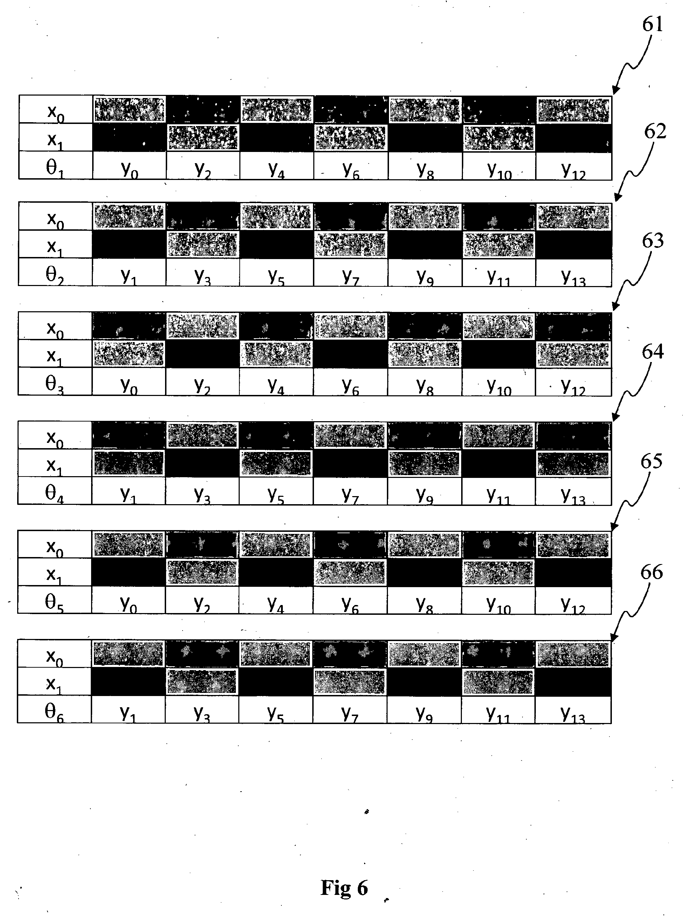

**Figure 6** illustrates representations 61 to 66 of the different views according to the different viewing angles $\theta_1$ to $\theta_6$ once de-multiplexed, according to a particular and non-limitative embodiment. De-multiplexing the different views 61 to 66 boils down to collect the pixels which belongs to the same viewing direction, i.e. to the same viewing angle $\theta_1$ to $\theta_6$, which is straightforward when departing from figures 5A and 5B. The view 61 comprises all-pixels as seen according to the viewing angle $\theta_1$; the view 62 comprises all pixels as seen according to the viewing angle $\theta_2$; the view 63 comprises all pixels as seen according to the viewing angle $\theta_3$; the view 64 comprises all pixels as seen according to the viewing angle $\theta_4$; the view 65 comprises all pixels as seen according to the viewing angle $\theta_5$ and the view 66 comprises all pixels as seen according to the viewing angle $\theta_6$. As it appears clearly on figure 6, each view 61 to 66 comprises all needed color for a Bayer-like representation without missing color information, i.e. all pixels are associated with either a Red, Green or Blue color component, with no exception, and all views comprises RGB components arranged according to a BCFA (Bayer Color Filter Array) configuration: the light grey corresponds to the 'Green' color component, the average grey corresponding to the 'Blue' color component and the dark grey corresponding to the 'Red' color component as for figures 4, 5A, 5B, 7A and 7B. Be it for even or odd pixel/photosensors number associated with a microlens, all views 61 to 66 are obtained with all the colors arranged in a BCFA configuration and for the even number of pixels/photosensors, there is no view-crosstalk.

Naturally, the association between the pixels of the views and the color components is not limited to a BCFA configuration as it depends on the arrangement of the color filters on the lenslet array. Color components different from RGB may be obtained when using color filters including color component different from RGB, for example Emerald, Yellow or Magenta.

Naturally, the invention is not limited to the embodiments previously described.

In particular, the invention is not limited to a plenoptic optical assembly but also extends to any device integrating such a plenoptic optical assembly, for example a plenoptic camera comprising a photosensors array or a telecommunication device comprising a photosensors array.

Telecommunication devices includes, for example, smartphones, smartwatches, tablets, computers, mobile phones, portable/personal digital assistants ("PDAs"), and other devices that facilitate communication of information between end-users but also set-top-boxes.

**Claims**

1.  Plenoptic optical assembly (201) comprising a primary lens (20) and a lenslet array (21), the lenslet array (21) comprising a plurality of microlenses (211, 212, 21 n), **characterized in that** a color filter array (22) is arranged on said lenslet array (21).

2.  Plenoptic optical assembly according to claim 1, wherein the color filter array (22) comprises a plurality of color filters (221, 222, 22n), the plurality of color filters (221, 222, 22n) being optically associated with the plurality of microlenses (211, 212, 21 n) according to a predetermined pattern in such a way that each single color filter (221; 222; 22n) is optically associated with a different microlens (211; 212; 21n).

3.  Plenoptic optical assembly according to claim 2, wherein the predetermined pattern associates two green color filters (412, 418), one blue color filter (411) and one red color filter (419) with respectively each microlens of a set of four microlenses (401, 402, 408, 409) arranged in two lines and two columns.

4.  Plenoptic optical assembly according to claim 2 or 3, wherein the geometry of a microlens of said plurality of microlenses (211, 212, 21 n) is adjusted according to the color filter optically associated with said microlens.

**5.** Plenoptic optical assembly according to any one of claims 1 to 4, wherein each microlens of the plurality of microlenses (211, 212, 21 n) has a plane side and a convex side, the lenslet array (21) having a first side, called plane side, formed with the plane sides of the plurality of microlenses and a second side, called convex side, formed with the convex sides of the plurality of microlenses, the color filter array (22) being arranged on said first side.

**6.** Plenoptic optical assembly according to claim 5, wherein said second side of the lenslet array (21) faces the primary lens (20).

**7.** Plenoptic optical assembly according to any one of claims 1 to 4, wherein both first and second sides of each microlens of the plurality of microlenses (211, 212, 21n) are convex, the lenslet array (21) having a first side formed with the first convex sides of the plurality of microlenses and a second side formed with the second convex sides of the plurality of microlenses, the second side of the lenslet array (21) facing the primary lens (20), the color filter array (22) being arranged on said first side.

**8.** Plenoptic optical assembly according to any one of claims 1 to 7, wherein each microlens of the plurality of microlenses has a circular form.

**9.** Plenoptic optical assembly according to any one of claims 1 to 7, wherein each microlens of the plurality of microlenses has a rectangular form or a square form.

**10.** Plenoptic optical assembly according to any one of claims 1 to 7, wherein each microlens of the plurality of microlenses has an hexagonal form.

**11.** Plenoptic camera comprising a plenoptic optical assembly according to any one of claims 1 to 10.

**12.** Plenoptic camera according to claim 11, wherein the plenoptic camera comprises a photosensor array (13) comprising a plurality of photosensors (131, 132, 133, 13m), at least two photosensors of the plurality of photosensors being optically associated with each microlens of the plurality of microlenses (211, 212, 21 n).

**13.** Plenoptic camera according to claim 11 or 12, wherein a gap is formed between the lenslet array (21) and the photosensor array (13).

**14.** Plenoptic camera according to any one of claims 11 to 13, wherein the color filter array (22) faces the photosensor array (13).

**15.** Telecommunication device comprising a plenoptic camera according to any one of claims 11 to 14.

**Fig 1**

**Fig 2**

Fig 3

**Fig 4**

**Fig 5A**

**Fig 5B**

61

| $x_0$ | | | | | | | |
|---|---|---|---|---|---|---|---|
| $x_1$ | | | | | | | |
| $\theta_1$ | $y_0$ | $y_2$ | $y_4$ | $y_6$ | $y_8$ | $y_{10}$ | $y_{12}$ |

62

| $x_0$ | | | | | | | |
|---|---|---|---|---|---|---|---|
| $x_1$ | | | | | | | |
| $\theta_2$ | $y_1$ | $y_3$ | $y_5$ | $y_7$ | $y_9$ | $y_{11}$ | $y_{13}$ |

63

| $x_0$ | | | | | | | |
|---|---|---|---|---|---|---|---|
| $x_1$ | | | | | | | |
| $\theta_3$ | $y_0$ | $y_2$ | $y_4$ | $y_6$ | $y_8$ | $y_{10}$ | $y_{12}$ |

64

| $x_0$ | | | | | | | |
|---|---|---|---|---|---|---|---|
| $x_1$ | | | | | | | |
| $\theta_4$ | $y_1$ | $y_3$ | $y_5$ | $y_7$ | $y_9$ | $y_{11}$ | $y_{13}$ |

65

| $x_0$ | | | | | | | |
|---|---|---|---|---|---|---|---|
| $x_1$ | | | | | | | |
| $\theta_5$ | $y_0$ | $y_2$ | $y_4$ | $y_6$ | $y_8$ | $y_{10}$ | $y_{12}$ |

66

| $x_0$ | | | | | | | |
|---|---|---|---|---|---|---|---|
| $x_1$ | | | | | | | |
| $\theta_6$ | $y_1$ | $y_3$ | $y_5$ | $y_7$ | $y_9$ | $y_{11}$ | $y_{13}$ |

**Fig 6**

**Fig 7A**

**Fig 7B**

**EUROPEAN SEARCH REPORT**

Europäisches
Patentamt
European
Patent Office
Office européen
des brevets

Application Number

EP 13 29 0275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 190 019 A1 (SONY CORP [JP]) 26 May 2010 (2010-05-26) * paragraphs [0003], [0019]; figures 1, 3, 6-12, 15 * | 1-15 | INV. H04N5/225 G02B3/00 |
| X | US 8 345 144 B1 (GEORGIEV TODOR G [US] ET AL) 1 January 2013 (2013-01-01) * figures 13, 19-20, 43 * | 1-15 | |
| X | US 2009/027542 A1 (YAMAMOTO KENJI [JP] ET AL) 29 January 2009 (2009-01-29) * figures 5, 13A, 13B, 17A, 17B * | 1-15 | |
| X | US 2010/277629 A1 (TANAKA TOSHIYUKI [JP]) 4 November 2010 (2010-11-04) * abstract; figure 4 * | 1-15 | |
| A | US 2013/033636 A1 (PITTS COLVIN [US] ET AL) 7 February 2013 (2013-02-07) * figures 2, 3, 12-14 * | 1-15 | |
|  |  |  | TECHNICAL FIELDS SEARCHED (IPC) |
|  |  |  | H04N G02B |

The present search report has been drawn up for all claims

| Place of search | Date of completion of the search | Examiner |
|---|---|---|
| Munich | 17 March 2014 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 29 0275

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2014

| Patent document cited in search report | | Publication date | Patent family member(s) | | | Publication date |
|---|---|---|---|---|---|---|
| EP 2190019 | A1 | 26-05-2010 | AT | 495550 | T | 15-01-2011 |
| | | | CN | 101738840 | A | 16-06-2010 |
| | | | EP | 2190019 | A1 | 26-05-2010 |
| | | | JP | 2010154493 | A | 08-07-2010 |
| | | | US | 2010128152 | A1 | 27-05-2010 |
| US 8345144 | B1 | 01-01-2013 | NONE | | | |
| US 2009027542 | A1 | 29-01-2009 | CN | 101345826 | A | 14-01-2009 |
| | | | JP | 4967873 | B2 | 04-07-2012 |
| | | | JP | 2009021919 | A | 29-01-2009 |
| | | | US | 2009027542 | A1 | 29-01-2009 |
| US 2010277629 | A1 | 04-11-2010 | NONE | | | |
| US 2013033636 | A1 | 07-02-2013 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013105151 A